# EUROPÄISCHE PATENTSCHRIFT

(11) **EP 1 843 035 B1**
(45) Veröffentlichungstag und Bekanntmachung des Hinweises auf die Patenterteilung: **01.08.2012**
(21) Anmeldenummer: 07006205.4
(22) Anmeldetag: 27.03.2007
(51) Int. Cl.: F02M 35/024, F02M 35/04, B01D 46/42

(54) **Filtereinsatz für einen Luftfilter eines Luftansaugsystems einer Brennkraftmaschine und Luftansaugsystem für eine Brennkraftmaschine**
Filter insert for an air filter for an air suction system and air suction system for a combustion engine
Installation de filtre pour un filtre à air d'un système d'aspiration d'air et système d'aspiration d'air pour un moteur à combustion interne

(30) Priorität: 28.03.2006 DE 202006004927 U
(43) Veröffentlichungstag der Anmeldung: 10.10.2007
(73) Patentinhaber: Hengst GmbH & Co. KG, 48147 Münster (DE)
(72) Erfinder: Borgmann, Marcel, 48329 Havixbeck (DE)
(74) Vertreter: Linnemann, Winfried

(56) Entgegenhaltungen:
- EP-A- 0 909 890
- WO-A-01/92713
- WO-A-2004/009210
- DE-A1- 10 230 430
- DE-A1-102004 029 476
- FR-A- 2 687 219
- US-A- 4 448 064
- US-A1- 2005 076 621
- US-A1- 2006 162 303

## Beschreibung

Die vorliegende Erfindung betrifft einen Filtereinsatz für einen Luftfilter eines Luftansaugsystems einer Brennkraftmaschine, wobei der Filtereinsatz mit einem einen Teil des Filtereinsatzes bildenden, im Betrieb abströmseitigen Luftströmungsgteichrichter ausgeführt ist, wobei der Filtereinsatz ein Plattenfiltereinsatz ist und wobei der Luftströmungsgleichrichter mehrere parallel zueinander verlaufende, an der Abströmseite des Filtereinsatzes angeordnete Strömungsleitwände aufweist, die über ihre Länge parallel zur Anströmseite des Filtereinsatzes gesehen eine sich ändernde Höhe aufweisen. Außerdem betrifft die Erfindung ein Luftansaugsystem für eine Brennkraftmaschine.

Bei heutigen Brennkraftmaschinen wird mittels eines Luftmassenmessers im Luftansaugsystem kontinuierlich die durchströmende Menge an Ansaugluft gemessen und einer Motorsteuerelektronik zugeführt. Dabei ist es wichtig, für eine möglichst gleichmäßige Anströmung des Luftmassenmessers zu sorgen, weil bei ungleichmäßiger Anströmung falsche Werte für die Menge der angesaugten Luft an die Motorsteuerelektronik geliefert würden. Diese falschen Werte würden zu Fehlfunktionen in der Motorsteuerung führen.

Das Dokument WO 01/92713 A1 zeigt einen Luftfilter mit einem Plattenfiltereinsatz, der mit einem Luftleitelement verbunden ist, das z.B. gemäß Figur 5 eine Luftströmungsgleichrichtung bewirken kann. Zweck des Luftleitelementes ist hier eine Verbesserung der Luft-Kraftstoff-Vermischung zur Erzielung einer besseren Verbrennung in der Brennkammer der zugehörigen Brennkraftmaschine. Mit dem Problem einer exakten Messung der Luftmasse des Luftstroms mit einem im Luftansaugweg stromab des Filtereinsatzes angeordneten Luftmassenmesser befasst sich dieses Dokument aber nicht.

Aus der US-PS 5 029 465 ist als vorbekannter Stand der Technik ein Luftfilter entnehmbar, der aus einem zweiteiligen Filtergehäuse besteht. Zwischen den beiden Teilen des Filtergehäuses ist ein Plattenfiltereinsatz angeordnet. Ein Lufteinlass ist an einem ersten Gehäuseteil vorgesehen; ein Luftauslass, der mit einem zur Brennkraftmaschine führenden Luftansaugkanal verbunden ist, ist am zweiten Gehäuseteil vorgesehen. Im Verlauf des Luftansaugkanals liegt ein Luftmassenmesser. Im Übergangsbereich vom zweiten Gehäuseteil zum Luftansaugkanal, konkret in der Luftauslassöffnung des Filtergehäuses, liegt hier ein Luftströmungsgteichrichter in Form eines Körpers mit einer Vielzahl von zueinander und zur Axialrichtung des Luftansaugkanals parallelen kleinen Luftkanälen. Bei dieser bekannten Lösung wird als nachteilig angesehen, dass für das Einbauen des Luftströmungsgleichrichters in das Luftansaugsystem ein relativ hoher Aufwand erforderlich ist, insbesondere bei der Montage. Hierdurch werden die Fertigungskosten und das Fehlerrisiko bei der Montage in unerwünschter Weise erhöht.

Für die vorliegende Erfindung stellt sich deshalb die Aufgabe, einen Filtereinsatz für einen Luftfilter eines Luftansaugsystems einer Brennkraftmaschine sowie ein Luftansaugsystem für eine Brennkraftmaschine der eingangs genannten Art zu schaffen, welche die vorstehend dargelegten Nachteile vermeiden und bei denen die Integration des Luftströmungsgleichrichters in das Luftansaugsystem verbilligt und vereinfacht ist und eine günstige, insbesondere turbulenzarme oder -freie Anströmung des Luftmassenmessers gewährleistet sein soll.

Die Lösung des ersten, den Filtereinsatz betreffenden Teils dieser Aufgabe gelingt erfindungsgemäß mit einem Filtereinsatz der eingangs genannten Art, der dadurch gekennzeichnet ist, dass der Luftströmungsgleichrichter durch die Strömungsleitwände gebildet ist und dass die Strömungsleitwände im Bereich eines Überganges der Luftströmung aus einem den Filtereinsatz im Betrieb aufnehmenden Filtergehäuse in einen an das Filtergehäuse anschließenden Luftansaugkanal ihre größte Höhe aufweisen.

Mit der Erfindung wird vorteilhaft erreicht, dass die Leitwände im Bereich des Überganges der Luftströmung aus dem Filtergehäuse in den Luftansaugkanal ihre stärkste Leit- und Führungswirkung haben. Außerdem sind für das Einbauen des Luftströmungsgleichrichters in das Luftansaugsystem keine separaten Montageschritte mehr erforderlich. Vielmehr wird der Luftströmungsgleichrichter automatisch beim ohnehin notwendigen Einbauen des Filtereinsatzes in das Filtergehäuse in das Luftansaugsystem integriert. Stromab des Filtereinsatzes wird so für eine gleichgerichtete und turbulenzarme Luftströmung gesorgt, wodurch für den üblicherweise stromab des Luftfilters in dessen Nähe angeordneten Luftmassenmesser eine günstige Anströmung, die für exakte Messwerte sorgt, gewährleistet wird.

Weiter schlägt die Erfindung vor, dass zumindest im Bereich eines Überganges der Luftströmung aus dem Filtergehäuse in den Luftansaugkanal die Strömungsleitwände eine der Axialrichtung des stromab folgenden Luftansaugkanalabschnitts entsprechende oder angenäherte Ausrichtung haben. Hiermit wird erreicht, dass die Luftströmung ohne oder zumindest ohne wesentliche Umlenkung aus dem Filtergehäuse in den nachfolgenden Luftansaugkanalabschnitt übertritt, was die Entstehung von unerwünschten Turbulenzen verhindert oder vermindert.

Zwecks möglichst einfacher Herstellung und Montage ist bevorzugt vorgesehen, dass die Strömungsleitwände mit einem Abstützgitter verbunden oder einstückig ausgeführt sind, das einen Filterstoffkörper des Filtereinsatzes abströmseitig überdeckt. Ein Abstützgitter wird auf der Abströmseite eines Plattenfiltereinsatzes in der Regel ohnehin vorgesehen, um den Filtereinsatz gegen die Kräfte abzustützen, die in Folge von Druckdifferenzen auf den beiden Seiten des Filtereinsatzes auftreten. Dabei können die Strömungsleitwände zumindest einen Teil der Funktion des Abstützgitters übernehmen und zu einer besonders stabilen Konstruktion des Abstützgitters beitragen.

Sowohl aus Kostengründen wie aus Gewichtsgründen ist bevorzugt vorgesehen, dass die Strömungsleitwände und das Abstützgitter ein einstückiges Spritzgussteil aus einem thermo- oder duroplastischen Kunststoff sind.

Neben dem Filtereinsatz betrifft die vorliegende Erfindung zur Lösung des zweiten Teils der Aufgabe ein Luftansaugsystem für eine Brennkraftmaschine, wobei das Luftansaugsystem mindestens einen Luftfilter mit einem Filtergehäuse und mit einem auswechselbaren Filtereinsatz nach einem der Ansprüche 1 bis 4, mindestens einen vom Filtergehäuse zur Brennkraftmaschine führenden Luftansaugkanal und mindestens einen im Luftströmungsweg liegenden Luftmassenmesser aufweist, wobei stromauf des Luftmassenmessers der Luftströmungsgleichrichter des Luftfilters zur Erzeugung einer möglichst turbulenzarmen Luftströmung im Bereich des Luftmassenmessers angeordnet ist, wobei die Strömungsleitwände im Bereich eines

Überganges der Luftströmung aus dem Filtergehäuse in den Luftansaugkanal ihre größte Höhe aufweisen.

Auch mit diesem erfindungsgemäßen Luftansaugsystem werden die weiter oben schon im Zusammenhang mit dem Filtereinsatz angesprochenen Vorteile erreicht.

Welter schlägt die Erfindung vor, dass zumindest im Bereich eines Überganges der Luftströmung aus dem Filtergehäuse in den Luftansaugkanal die Strömungsleitwände eine der Axialrichtung des stromab folgenden Luftansaugkanalabschnitts entsprechende oder angenäherte Ausrichtung haben. Hiermit wird erreicht, dass die Luftströmung ohne oder zumindest ohne wesentliche Umlenkung aus dem Filtergehäuse in den nachfolgenden Luftansaugkanalabschnitt übertritt, was die Entstehung von unerwünschten Turbulenzen verhindert oder vermindert.

Auch hier ist zwecks möglichst einfacher Herstellung und Montage bevorzugt vorgesehen, dass die Strömungsleitwände mit einem Abstützgitter verbunden oder einstückig ausgeführt sind, das einen Flterstoffkörper des Filtereinsatzes abströmseitig überdeckt.

Aus Kostengründen wie aus Gewichtsgründen ist auch hier bevorzugt vorgesehen, dass die Strömungsleitwände und das Abstützgitter ein einstückiges Spritzgussteil aus einem thermo- oder duroplastischen Kunststoff sind.

Damit am Luftmassenmesser eine möglichst turbulenzarme Luftströmung vorliegt, ist bevorzugt in weiterer Ausgestaltung des Luftansaugsystems der Luftmassenmesser in einem unmittelbar stromab des Luftfilters liegenden Luftensaugkanalabschnitt angeordnet.

Um auch im Hinblick auf den Luftmassenmesser eine möglichst einfache Fertigung und Montage zu erzielen, ist bevorzugt der Luftansaugkanalabschnitt mit dem Luftmassenmesser als unmittelbar mit dem Filtergehäuse verbundenes oder einstückiges Rohrstück ausgeführt.

Im Folgenden wird ein Ausführungsbeispiel der Erfindung anhand einer Zeichnung erläutert. Die Figuren der Zeichnung zeigen:
- Figur 1: einen Luftfilter in perspektivischer Draufsicht,
- Figur 2: den Luftfilter aus Figur 1 im Längsschnitt,
- Figur 3: die einzelnen Teile des Luftfilters aus Figur 1 einschließlich eines Deckels in einer Explosionsdarstellung, und
- Figur 4: einen Filtereinsatz des Luftfilters gemäß den Figuren 1 bis 3 als Einzelteil in perspektivischer Ansicht

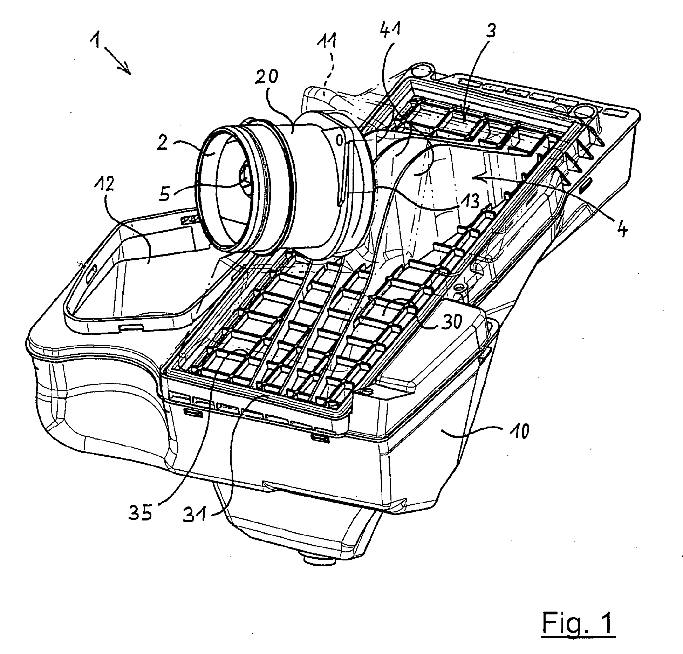

Figur 1 zeigt einen Luftfilter 1, beispielsweise für die Brennkraftmaschine eines Kraftfahrzeuges. Als wesentliche Teile umfasst der Luftfilter 1 ein Filtergehäuse 10, in das ein Filtereinsatz 3, hier ein Plattenfiltereinsatz, eingebaut ist. Mittels eines oberseitigen Deckels 11, der hier "durchsichtig" in dünnen strichpunktierten Linien dargestellt ist, ist das Filtergehäuse 10 verschließbar. Durch einen Lufteinlass 12 gelangt Umgebungsluft in das Innere des Filtergehäuses 10. Durch einen Luftansaugkanal 2, der zu einer zugehörigen, nicht dargestellten Brennkraftmaschine führt, strömt gefilterte Luft ab. Mit dem Deckel 11 ist ein Luftansaugkanalabschnitt 20 in Form eines kurzen Rohrstücks verbunden. Im Inneren dieses Luftansaugkanalabschnitts 20 ist ein Luftmassenmesser 5 angeordnet, mit dem die Menge der durchströmenden Luft erfassbar und als Messwert an eine zur Brennkraftmaschine gehörende Steuerelektronik übermittelbar ist.

Der Filtereinsatz 3 besteht aus einem flachen, quaderförmigen Filterstoffkörper 30. der in Draufsicht eine Rechteckform hat. Auf der in Figur 1 oben liegenden Abströmseite des Filtereinsatzes 3 ist ein Abstützgitter 35 angeordnet, das den Filterstoffkörper 30 gegen auf ihn einwirkende Kräfte infolge von Druckdifferenzen zwischen Anströmseite und Abströmseite abstützt. Randseitig umlaufend besitzt der Filtereinsatz 3 einen angespritzten oder angegossenen Dichtrahmen 31 aus einem elastisch-flexiblen Schaumkunststoff. Mittels dieses Dichtrahmens 31 ist der Filtereinsatz 3 bei aufgesetztem Deckel 11 dichtend im Filtergehäuse 10 gehaltert.

Einstückig mit dem Abstützgitter 35 ist hier ein Luftströmungsgleichrichter 4 ausgeführt. Dieser Luftströmungsgleichrichter 4 besteht hier aus einer Anordnung von mehreren, hier drei Strömungsleitwänden 41. Die Strömungsleitwände 41 verlaufen parallel zueinander in einer gebogenen Form und mit einer in ihrer Längsrichtung gesehen sich verändernden Höhe. Nahe den Stimseiten des Filtereinsatzes 3 haben die Strömungsteitwände 41 ihre minimale Höhe bzw. geht hier die Höhe auf den Wert Null zurück. Im Bereich eines Überganges zum Luftansaugkanalabschnitt 20 haben die Strömungsleitwände 41 ihre größte Höhe. Weiterhin haben die Strömungsleitwände 41 eine solche Ausrichtung, dass sie die aus dem Filterstoffkörper 30 oberseitig austretende, gefilterte Luft in eine Strömungsrichtung lenken, die im wesentlichen in Axialrichtung des Luftansaugkanalabschnitts 20 weist, so dass ein turbulenzarmer oder -freier Strömungsverlauf im Luftansaugkanalabschnitt 20 erzielt wird. Diese turbulenzarme oder -freie Strömung liegt dann auch im Bereich des im Luftansaugkanalabschnitt 20 angeordneten Luftmassenmessers 5 vor, was für dessen exakte Funktion und für die Lieferung von korrekten Messwerten wichtig und vorteilhaft ist.

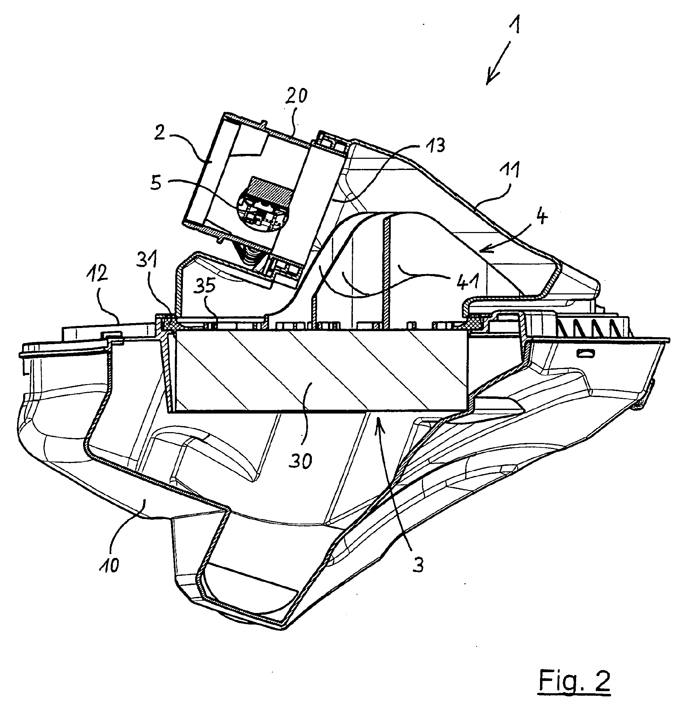

Figur 2 zeigt den Luftfilter 1 aus Figur 1 im Längsschnitt, wobei in Figur 2 auch der Deckel 11 eingezeichnet ist.

Durch den links in Figur 2 liegenden Lufteinlass 12 gelangt die Umgebungsluft in das Innere des Filtergehäuses 10 und durchströmt dann den Filtereinsatz 3 bzw. dessen Filterstoffkörper 30 von unten nach oben. Oberseitig auf dem Filterstoffkörper 30 liegt das Abstützgitter 35. Randseitig umlaufend ist an dem Filterstoffkörper 30 der Dichtrahmen 31 angebracht. Dieser Dichtrahmen 31 liegt dichtend zwischen dem Filtergehäuse 10 und dem Deckel 11, wenn der Deckel 11, wie in Figur 2 dargestellt, angebracht ist.

Auf der Oberseite des Filtereinsatzes 3 ist der Luftströmungsgleichrichter 4 erkennbar, der durch die drei Strömungsleitwände 41 gebildet ist. Auch die Figur 2 veranschaulicht, dass die von unten nach oben den Filtereinsatz 3 durchströmende Luft an der Oberseite des Filtereinsatzes 3 durch die Strömungsteitwände 41 so geführt und gelenkt wird, dass sie mit möglichst geringen Turbulenzen durch den Luftansaugkanalabschnitt 20 mit dem darin angeordneten Luftmassenmesser 5 strömt. Von dort strömt die Luft durch den nachfolgenden Luftansaugkanal 2 weiter zur nicht dargestellten, zugehörigen Brennkraftmaschine.

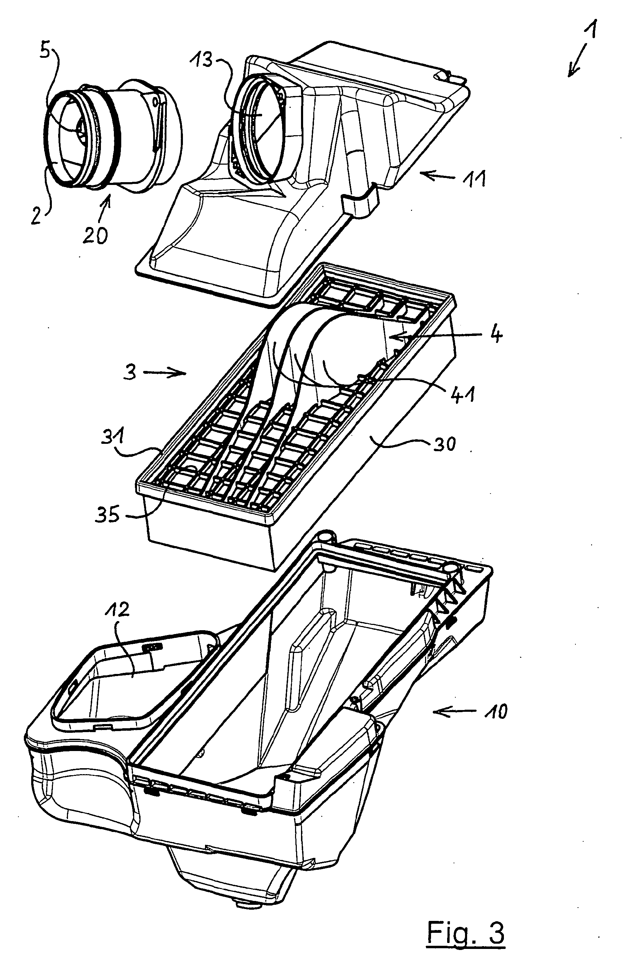

Figur 3 zeigt alle Einzelteile des Luftfilters 1 gemäß den Figuren 1 und 2 in einer Explosionsdarstellung, Unten in Figur 3 ist das Filtergehäuse 10 mit dem Lufteinlass 12 sichtbar. Darüber ist der Filtereinsatz 3 dargestellt, der aus dem Filterstoffkörper 30. dem umlaufenden Dichtrahmen 31, dem Abstützgitter 35 und dem damit einstückigen, durch die Strömungsleitwände 41 gebildeten Luftströmungsgleichrichter 4 besteht.

Oberhalb der Filtereinsatzes 3 ist der Deckel 11 des Luftfilters 1 dargestellt, der einen Luftauslass 13 aufweist.

Links vom Deckel 11 schließlich ist der rohrförmige Luftansaugkanalabschnitt 20 mit dem darin angeordneten Luftmassenmesser 5 dargestellt, wobei der Luftansaugkanalabschnitt 20 den Anfang eines zur zugehörigen Brennkraftmaschine führenden Luftansaugkanals 2 bildet.

Wie die Figur 3 veranschaulicht, besteht der Luftfilter 1 einschließlich des Luftmassenmessers 5 aus lediglich vier Einzelteilen, die miteinander zu verbinden sind, was eine schnelle und einfache Montage und damit kostengünstige Fertigung gewährleistet.

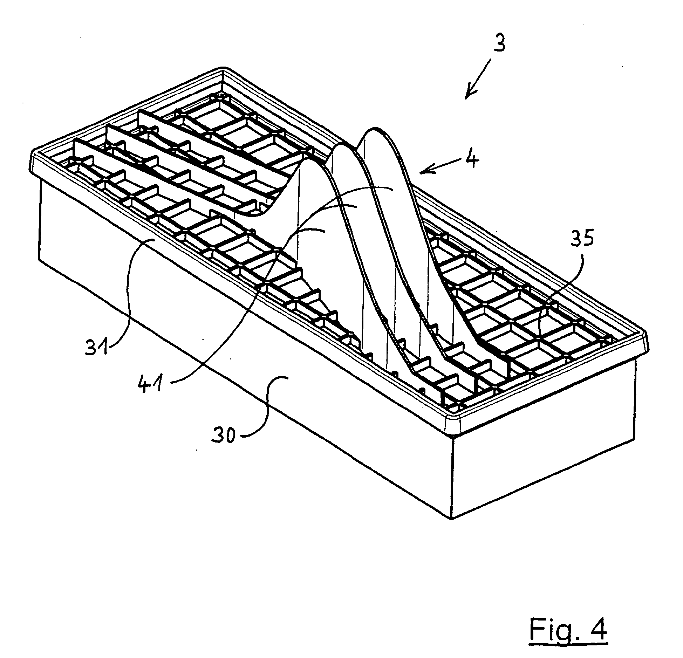

Figur 4 zeigt den Filtereinsatz 3 aus den Figuren 1 bis 3 in einer geänderten perspektivischen Ansicht. Der Filtereinsatz 3 besteht aus dem Filterstoffkörper 30, dem umlaufenden Dichtrahmen 31 und dem Abstützgitter 35 auf der oben liegenden Abströmseite. Einstückig mit dem Abstützgitter 35 ist der Luftströmungsgleichrichter 4, bestehend aus den drei Strömungsleitwänden 41, ausgeführt.

## Patentansprüche

1. Filtereinsatz (3) für einen Luftfilter (1) eines Luftansaugsystems einer Brennkraftmaschine, wobei der Filtereinsatz (3) mit einem einen Teil des Filtereinsatzes (3) bildenden, im Betrieb abströmseitigen Luftströmungsgleichrichter (4) ausgeführt ist, wobei der Filtereinsatz (3) ein Plattenfiltereinsatz ist und wobei der Luftströmungsgleichrichter (4) mehrere parallel zueinander verlaufende, an der Abströmseite des Filtereinsatzes (3) angeordnete Strömungsleitwände (41) aufweist, die über ihre Länge parallel zur Abströmseite des Filtereinsatzes (3) gesehen eine sich ändernde Höhe aufweisen,
**dadurch gekennzeichnet,**
**dass** der Luftströmungsgleichrichter (4) durch die Strömungsleitwände (41) gebildet ist und dass die Strömungsleitwände (41) im Bereich eines Überganges der Luftströmung aus einem den Filtereinsatz (3) im Betrieb aufnehmenden Filtergehäuse (10) in einen an das Filtergehäuse (10) anschließenden Luftansaugkanal (2) ihre größte Höhe aufweisen.

2. Filtereinsatz nach Anspruch 1, **dadurch gekennzeichnet, dass** zumindest im Bereich des Überganges der Luftströmung aus dem den Filtereinsatz (3) im Betrieb aufnehmenden Filtergehäuse (10) in den an das Filtergehäuse (10) anschließenden Luftansaugkanal (2) die Strömungsleitwände (41) eine der Axialrichtung eines stromab folgenden Luftansaugkanalabschnitts (20) entsprechende oder angenäherte Ausrichtung haben.

3. Filtereinsatz nach Anspruch 1 oder 2, **dadurch gekennzeichnet, dass** die Strömungsleitwände (41) mit einem Abstützgitter (35) verbunden oder einstückig ausgeführt sind, das einen Filterstoffkörper (30) des Filtereinsatzes (3) abströmseitig überdeckt.

4. Filtereinsatz nach Anspruch 3, **dadurch gekennzeichnet, dass** die Strömungsleitwände (41) und das Abstützgitter (35) ein einstückiges Spritzgussteil aus einem thermo- oder duroplastischen Kunststoff sind.

5. Luftansaugsystem für eine Brennkraftmaschine, wobei das Luftansaugsystem mindestens einen Luftfilter (1) mit einem Filtergehäuse (10) und mit einem auswechselbaren Filtereinsatz (3) nach einem der Ansprüche 1 bis 4, mindestens einen vom Filtergehäuse (10) zur Brennkraftmaschine führenden Luftansaugkanal (2) und mindestens einen im Luftströmungsweg liegenden Luftmassenmesser (5) aufweist, wobei stromauf des Luftmassenmessers (5) der Luftströmungsgleichrichter (4) des Filtereinsatzes (3) zur Erzeugung einer möglichst turbulenzarmen Luftströmung im Bereich des Luftmassenmessers (5) angeordnet ist, wobei die Strömungsleitwände (41) im Bereich eines Überganges der Luftströmung aus dem Filtergehäuse (10) in den Luftansaugkanal (2) ihre größte Höhe aufweisen.

6. Luftansaugsystem nach Anspruch 5, **dadurch gekennzeichnet, dass** zumindest im Bereich des Überganges der Luftströmung aus dem Filtergehäuse (10) in den Luftansaugkanal (2) die Strömungsleitwände (41) eine der Axialrichtung des stromab folgenden Luftansaugkanalabschnitts (20) entsprechende oder angenäherte Ausrichtung haben.

7. Luftansaugsystem nach Anspruch 5 oder 6, **dadurch gekennzeichnet, dass** die Strömungsleitwände (41) mit einem Abstützgitter (35) verbunden oder einstückig ausgeführt sind, das einen Filterstoffkörper (30) des Filtereinsatzes (3) abströmseitig überdeckt.

8. Luftansaugsystem nach Anspruch 7, **dadurch gekennzeichnet, dass** die Strömungsleitwände (41) und das Abstützgitter (35) ein einstückiges Spritzgussteil aus einem thermo- oder duroplastischen Kunststoff sind.

9. Luftansaugsystem nach einem der Ansprüche 5 bis 8, **dadurch gekennzeichnet, dass** der Luftmassenmesser (5) in einem unmittelbar stromab des Luftfilters (1) liegenden Luftansaugkanalabschnitt (20) angeordnet ist.

10. Luftansaugsystem nach Anspruch 9, **dadurch gekennzeichnet, dass** der Luftansaugkanalabschnitt (20) mit dem Luftmassenmesser (5) als unmittelbar mit dem Filtergehäuse (10) verbundenes oder einstückiges Rohrstück ausgeführt ist.

## Claims

1. Filter insert (3) for an air filter (1) of an air suction system of an internal combustion engine, wherein the filter insert (3) is designed with an operationally downstream side air flow rectifier (4) forming a part of the filter insert (3), wherein the filter insert (3) is a plate filter insert and wherein the air flow rectifier (4) has several parallel extending flow guide walls (41) arranged on the downstream side of the filter insert (3) which have a changing height seen over their length parallel to the downstream side of the filter insert (3),
**characterized in that**
the air flow rectifier (4) is formed by the flow guide walls (41) and that the flow guide walls (41) have their greatest height in the area of transition of the air flow from a filter housing (10) - accepting the filter insert (3) in operation - into an air suction duct (2) connecting to the filter housing (10).

2. Filter insert according to claim 1, **characterized in that** the flow guide walls (41) have an orientation corresponding to or approximating the axial direction of a downstream following air suction duct section (20) at least in the area of transition of the air flow from the filter housing (10) - accepting the filter insert (3) in operation - into the air suction duct (2) connecting to the filter housing (10).

3. Filter insert according to claim 1 or 2, **characterized in that** the flow guide walls (41) are connected or designed in one piece with a support grid (35) which covers a filter cloth body (30) of the filter insert (3) on the downstream side.

4. Filter insert according to claim 3, **characterized in that** the flow guide walls (41) and the support grid (35) are a one-piece thermoplastic or thermosetting plastic injection molded part.

5. Air suction system for an internal combustion engine, wherein the air suction system has at least one air filter (1) with a filter housing (10) and with a replaceable filter insert (3) according to any one of the claims 1 to 4, at least one air suction duct (2) leading from the filter housing (10) to the internal combustion engine and at least one air flow meter (5) lying in the air flow path, wherein upstream of the air flow meter (5) the air flow rectifier (4) of the filter insert (3) is arranged to generate an air flow with the lowest possible turbulence in the area of the air flow meter (5), wherein the flow guide walls (41) have their greatest height in the area of transition of the air flow from the filter housing (10) into the air suction duct (2).

6. Air suction system according to claim 5, **characterized in that** the flow guide walls (41) have an orientation corresponding to or approximating the axial direction of the downstream following air suction duct section (20) at least in the area of transition of the air flow from the filter housing (10) into the air suction duct (2).

7. Air suction system according to claim 5 or 6, **characterized in that** the flow guide walls (41) are connected or designed in one piece with a support grid (35) which covers a filter cloth body (30) of the filter insert (3) on the downstream side.

8. Air suction system according to claim 7, **characterized in that** the flow guide walls (41) and the support grid (35) are a one-piece thermoplastic or thermosetting plastic injection molded part.

9. Air suction system according to any one of the claims 5 to 8, **characterized in that** the air flow meter (5) is arranged in an air suction duct section (20) lying directly downstream of the air filter (1).

10. Air suction system according to claim 9, **characterized in that** the air suction duct section (20) with the air flow meter (5) is designed as a tube end of one-piece or directly connected with the filter housing (10).

## Revendications

1. Élément filtrant (3) pour un filtre à air (1) d'un système d'aspiration d'air d'un moteur à combustion interne, l'élément filtrant (3) étant réalisé avec un redresseur d'écoulement d'air (4) formant une partie de l'élément filtrant (3) et situé du côté aval pendant le fonctionnement, l'élément filtrant (3) étant un élément filtrant à plaques et le redresseur d'écoulement d'air (4) présentant plusieurs parois de guidage de l'écoulement (41) parallèles entre elles et situées du côté aval de l'élément filtrant (3), lesquelles parois présentent, vues parallèlement au côté aval de l'élément filtrant (3), une hauteur variable sur leur longueur,
**caractérisé en ce que**
le redresseur d'écoulement d'air (4) est formé par les parois de guidage de l'écoulement (41) et **en ce que** les parois de guidage de l'écoulement (41) présentent leur hauteur maximale dans la zone d'un passage de l'écoulement d'air allant d'un boîtier de filtre (10) qui loge l'élément filtrant (3) en fonctionnement vers un canal d'aspiration d'air (2) qui fait suite au boîtier de filtre (10).

2. Élément filtrant selon la revendication 1, **caractérisé en ce que** les parois de guidage de l'écoulement (41) ont, au moins dans la zone du passage de l'écoulement d'air allant d'un boîtier de filtre (10) qui loge l'élément filtrant (3) en fonctionnement vers le canal d'aspiration d'air (2) qui fait suite au boîtier de filtre (10), une orientation correspondant ou correspondant approximativement à l'orientation axiale d'une section du canal d'aspiration d'air (20) faisant suite en aval.

3. Élément filtrant selon la revendication 1 ou 2, **caractérisé en ce que** les parois de guidage de l'écoulement (41) sont reliées au moyen d'une grille d'appui (35) ou sont réalisées d'une seule pièce avec ladite grille, laquelle recouvre un corps de matière filtrante (30) de l'élément filtrant (3) du côté aval.

4. Élément filtrant selon la revendication 3, **caractérisé en ce que** les parois de guidage de l'écoulement (41) et la grille d'appui (35) sont une monopièce moulée par injection de matière plastique thermoplastique ou duroplastique.

5. Système d'aspiration d'air pour un moteur à combustion interne, le système d'aspiration d'air comportant au moins un filtre à air (1) avec un boîtier de filtre (10) et un élément filtrant remplaçable (3) selon l'une des revendications 1 à 4, au moins un canal d'aspiration d'air (2) allant du boîtier de filtre (10) au moteur à combustion interne et au moins un mesureur de masse d'air (5) situé dans le chemin de l'écoulement d'air, le redresseur de l'écoulement d'air (4) de l'élément filtrant (3) étant situé en amont du mesureur de masse d'air (5) pour générer un écoulement d'air aussi peu turbulent que possible dans la zone du mesureur de masse d'air (5), les parois de guidage de l'écoulement (41) présentant leur hauteur maximale dans la zone d'un passage de l'écoulement d'air allant du boîtier de filtre (10) au canal d'aspiration d'air (2).

6. Système d'aspiration d'air selon la revendication 5, **caractérisé en ce que** les parois de guidage de l'écoulement (41) ont, au moins dans la zone du passage de l'écoulement d'air allant du boîtier de filtre (10) au canal d'aspiration d'air (2), une orientation correspondant ou correspondant approximativement à l'orientation axiale de la section du canal d'aspiration d'air (20) faisant suite en aval.

7. Système d'aspiration d'air selon la revendication 5 ou 6, **caractérisé en ce que** les parois de guidage de l'écoulement (41) sont reliées au moyen d'une grille d'appui (35) ou sont réalisées d'une seule pièce avec ladite grille, laquelle recouvre un corps de matière filtrante (30) de l'élément filtrant (3) du côté aval.

8. Système d'aspiration d'air selon la revendication 7, **caractérisé en ce que** les parois de guidage de l'écoulement (41) et la grille d'appui (35) sont une monopièce moulée par injection de matière plastique thermoplastique ou duroplastique.

9. Système d'aspiration d'air selon l'une des revendications 5 à 8, **caractérisé en ce que** le mesureur de masse d'air (5) est situé dans une section du canal d'aspiration d'air (20) située directement en aval du filtre à air (1).

10. Système d'aspiration d'air selon la revendication 9, **caractérisé en ce que** la section du canal d'aspiration d'air (20) avec le mesureur de masse d'air (5) se présente sous la forme d'une pièce tubulaire reliée directement au boîtier de filtre (10) ou d'une pièce tubulaire réalisée d'une seule pièce.
